Europäisches Patentamt

**European Patent Office**

**Office européen des brevets**

(19)

(11) Numéro de publication: **0 033 816**
A1

## (12) DEMANDE DE BREVET EUROPEEN

(21) Numéro de dépôt: **80401712.7**

(22) Date de dépôt: **01.12.80**

(51) Int. Cl.³: **B 60 J 7/18**

(30) Priorité: **31.01.80 FR 8002161**

(43) Date de publication de la demande: **19.08.81**
**Bulletin 81/33**

(84) Etats contractants désignés: **DE GB IT SE**

(71) Demandeur: **REGIE NATIONALE DES USINES RENAULT, Boite postale 103 8-10 avenue Emile Zola, F-92109 Boulogne-Billancourt (FR)**

(72) Inventeur: **Bascou, Jacques, 247, Boulevard Jean Jaurès, F-92109 Boulogne Billancourt (FR)**
Inventeur: **Bellot, Dominique, 187, rue de l'Empereur, F-92500 Rueil (FR)**

(74) Mandataire: **Noel, Michel et al, REGIE NATIONALE DES USINES RENAULT S. 0804 8 & 10, avenue Emile Zola, F-92109 Boulogne Billancourt (FR)**

(54) **Dispositif de manoeuvre d'un toit ouvrant de véhicule automobile.**

(57) Dispositif de manœuvre d'un toit ouvrant coulissant de véhicule automobile, du type comportant des moyens de transmission par compression-traction et leur moyen de guidage, ainsi que des moyens de guidage du bord avant du panneau de toit et des moyens de guidage et d'escamotage vertical du bord arrière de ce panneau de toit, caractérisé par le fait que l'ensemble de ces moyens de guidage est assuré par une glissière unique formée d'un tronçon avant (19) constitués par une glissière double fermée et deux tronçons latéraux (22, 23) constitués chacun par une glissière simple ouverte au moyen d'une ouverture latérale tournée vers l'extérieur et prolongée sur ses deux bords par des rebords horizontaux (2, 3), avec deux tronçons (15, 16) de ruban plastique flexible perforé coulissant dans ces glissières.

Dispositif de manoeuvre d'un toit ouvrant de véhicule automobile.

L'invention concerne la manoeuvre des toits ouvrants à panneau coulissant sur les véhicules automobiles.

On sait que ce type de toit ouvrant est constitué par un panneau généralement rectangulaire qui en position fermée obture un orifice rectangulaire découpé dans la surface du pavillon, en affleurant cette dernière pour en assurer la continuité dans un but aérodynamique et esthétique, et qui s'ouvre par coulissement longitudinal vers l'arrière et vers l'intérieur du pavillon après un mouvement d'escamotage vertical au moins du bord arrière du panneau. Cette manoeuvre qui se faisait autrefois par action directe sur le panneau coulissant lui-même, s'opère actuellement de préférence par une action douce et progressive sur une manivelle de manoeuvre située à poste fixe au bord intérieur avant de l'ouverture. La transmission du mouvement à partir de cette manivelle se fait généralement à l'aide d'un câble-crémaillère métallique du type Bowden coulissant dans une gaine métallique. L'ensemble du mécanisme doit donc assurer le guidage sensiblement rectiligne du bord avant du panneau, l'escamotage vertical suivi du guidage horizontal du bord arrière du panneau, enfin le guidage du ou des câbles-crémaillères qui fonctionnent alternativement en traction et en compression. Cela conduit par conséquent à un ensemble relativement encombrant et bruyant qui pose de graves problèmes de lubrification et d'oxydation nécessitant sa protection contre l'eau d'infiltration.

On connaît par ailleurs des rubans plastiques flexibles perforés, utilisés notamment pour la manoeuvre des lève-vitres, mais qui ne résolvent que très partiellement les problèmes exposés ci-dessus.

Le but de l'invention est d'éliminer les inconvénients précédents en réalisant un mécanisme de manouevre de toit ouvrant plus simple et plus sûr, et en même temps moins encombrant et plus silencieux.

L'invention consiste à réaliser l'ensemble des trois guidages exposés précédemment à l'aide d'une glissière unique ayant en plan un tracé en U avec un tronçon avant rectiligne et deux tronçons latéraux rectilignes raccordés chacun au tronçon avant par une courbe en arc de cercle, le tronçon avant ainsi que les deux courbes de raccordement étant constitués par une glissière fermée double dont chaque passage a une section rectangulaire verticale, et les deux tronçons latéraux étant constitués chacun par une glissière simple et ouverte dont le passage est également à section rectangulaire verticale avec l'ouverture tournée vers l'extérieur, les deux bords de l'ouverture étant prolongés chacun par une aile horizontale, l'ensemble des deux ailes de chaque glissière simple servant de guidage pour un chariot avant solidaire du panneau et coulissant librement dans la glissière tout en autorisant un léger mouvement d'inclinaison, et pour un chariot arrière entraîné qui est réuni au panneau par l'intermédiaire d'un mécanisme assurant le déplacement vertical du bord arrière de ce panneau, enfin à assurer l'entraînement des deux chariots arrière par deux rubans perforés en matière plastique flexible de type connu, chacun des rubans s'étendant dans le passage d'une des glissières simples et dans un des passages de la glissière double, avec son extrémité arrière fixée au chariot arrière correspondant et son extrémité avant engrenant avec un pignon d'entraînement à axe vertical disposé au milieu de la glissière double entre les deux passages de celle-ci qui s'incurvent localement en arc de cercle autour du pignon.

L'ensemble du mécanisme est de préférence monté sur une cassette formant gouttière et venant se fixer sur la surface intérieure du pavillon.

D'autres particularités de l'invention apparaîtront dans la description qui va suivre d'un mode de réalisation pris comme exemple et représenté sur le dessin annexé, sur lequel :

la fig. 1 est une vue en plan de l'ensemble du mécanisme;

la fig. 2 est une coupe selon II-II de la fig. 1;

la fig. 3 est une vue à plus grande échelle de la partie III de la fig. 2;

la fig. 4 est une coupe verticale à plus grande échelle, selon IV-IV de la fig. 1;

la fig. 5 est une vue correspondant à la fig. 4 dans une autre phase du fonctionnement montrant l'escamotage vertical;

la fig. 6 est une coupe horizontale selon VI-VI de la fig. 3;

la fig. 7 est une coupe selon VII-VII de la fig. 4;

la fig. 8 est une coupe selon VIII-VIII de la fig. 4; et

la fig. 9 est une coupe selon IX-IX de la fig. 6.

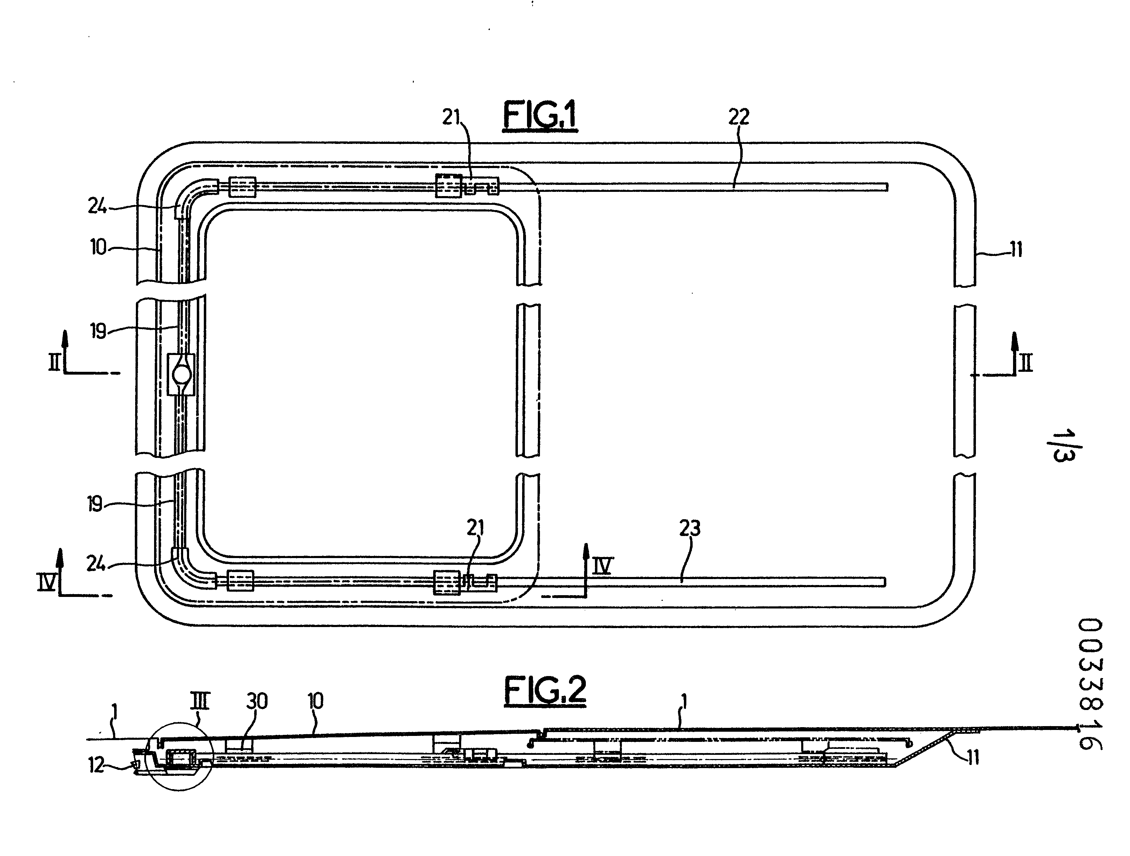

Comme on le voit en particulier sur les fig. 1 et 2, qui représentent le toit ouvrant en position fermée, le toit ouvrant est constitué d'une manière usuelle à l'aide d'un panneau 10, sensiblement rectangulaire, représenté en trait mixte sur la fig. 1, et qui vient fermer une ouverture de dimension correspondante dans le pavillon 1 du véhicule. En position fermée, comme il apparait sur la fig. 2, la surface externe du panneau 10 affleure la surface du pavillon 1 sur tous les bords de cette ouverture de manière à assurer la continuité de la surface d'ensemble. D'une manière usuelle, l'ouverture du panneau se fait par déplacement vertical du bord arrière du panneau, c'est-à-dire celui situé sur le côté droit des fig. 1 et 2, suivi d'un coulissement vers l'arrière du panneau jusqu'à la position représentée en trait mixte sur la fig. 2.

Ce mouvement s'obtient à l'aide du mécanisme selon l'invention qui comprend essentiellement une glissière affectant en plan une forme en U, visible sur la fig. 1, avec un tronçon avant rectiligne 19 et des tronçons rectilignes latéraux 22 et 23 raccordés respectivement au tronçon avant par des pièces de raccordement 24 en arc de cercle. L'ensemble est fixé de préférence sur une cassette emboutie 11 qui vient se fixer ultérieurement sous le pavillon 1.

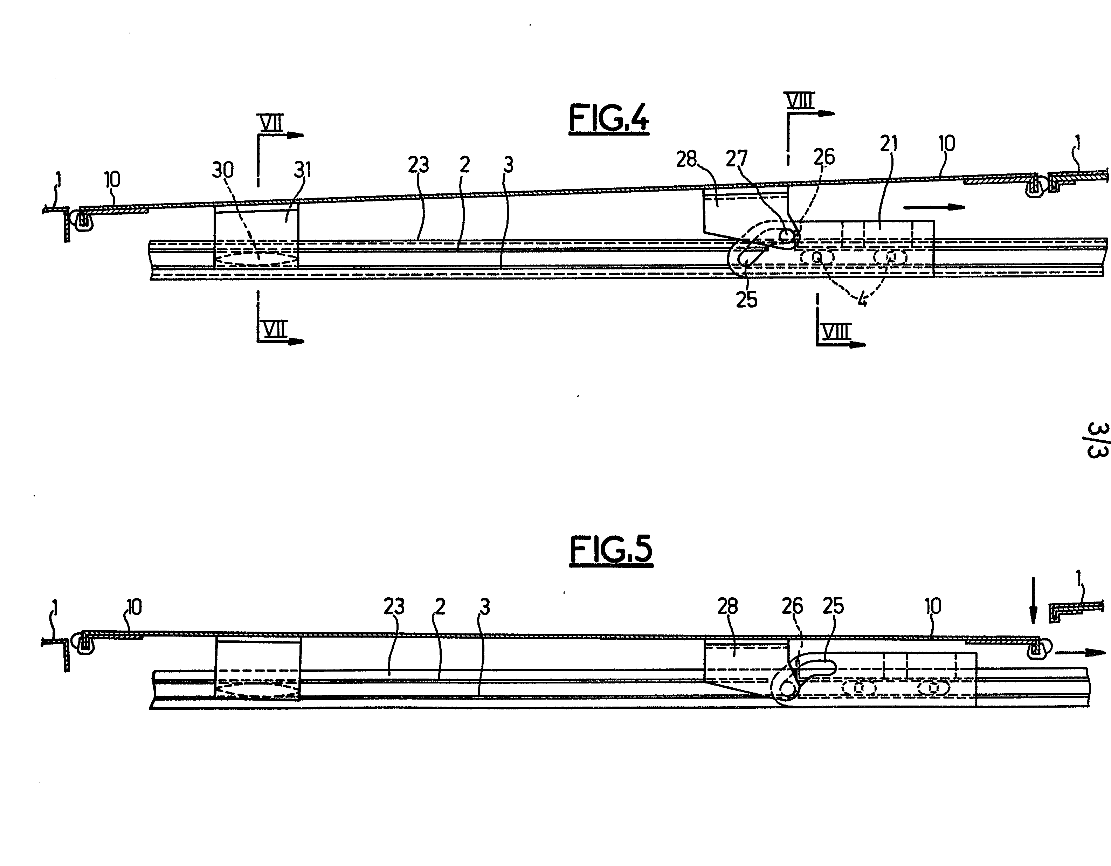

Conformément à l'invention, le tronçon avant 19 est constitué par une glissière double fermée visible en coupe sur la fig. 9. Cette glissière est formée par deux tronçons bout à bout d'un profilé 19 comportant deux rainures étroites et profonde ayant chacune une section en forme de passage rectan-

4

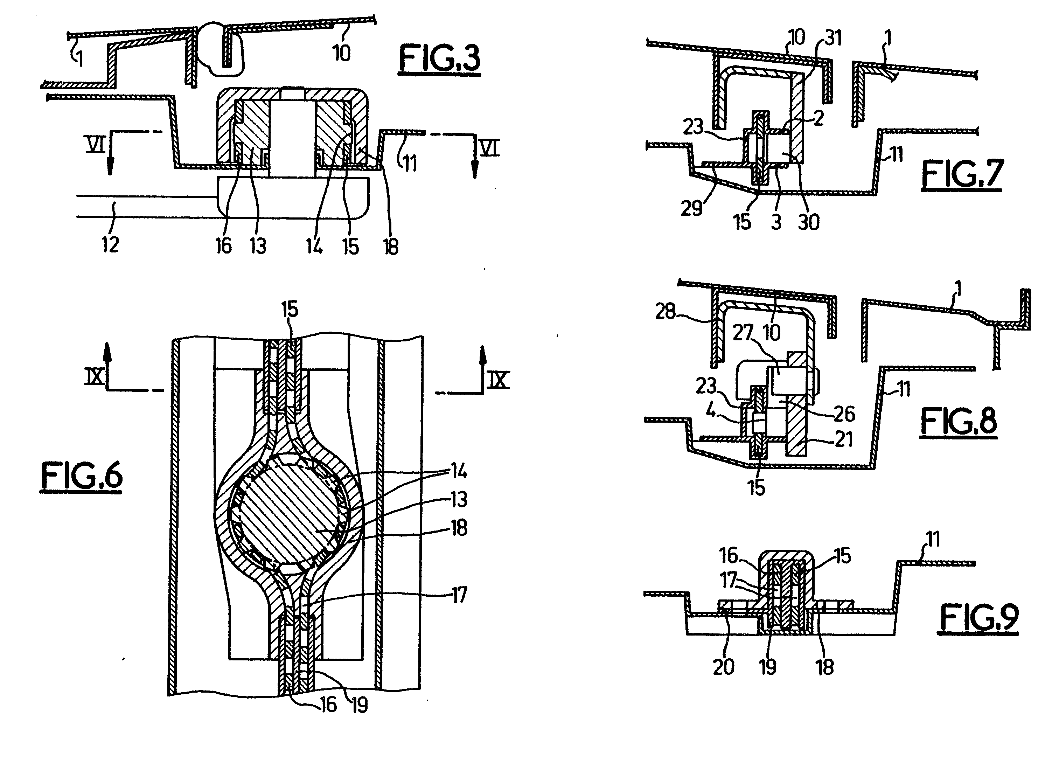

gulaire disposé verticalement, et qui sont refermées à la base par une forme correspondante de la cassette 11 sur laquelle est fixée le profilé 19 à l'aide d'une aile 20 visible sur la fig. 9. Au voisinage du centre, les deux extrémités en regard des deux tronçons 19 sont coiffées par un boîtier plastique 18 visible en détail sur les fig. 3 et 6 et dans lequel peut tourillonner un pignon 13 muni de dents 14 appropriées pour engréner dans des perforations 17 correspondantes de deux rubans plastiques flexibles 15 et 16 placés comme représenté sur les figures, c'est-à-dire de manière qu'ils épousent chacun un certain arc d'engrénement à la périphérie du pignon 13, en étant guidés entre ce pignon et une partie sensiblement cylindrique du boîtier 18, après quoi les rubans sont guidés dans des passages de raccordement vers les passages rectilignes correspondants à l'intérieur des tronçons 19.

Dans les angles, des pièces de raccordement d'angle 24 s'emboîtent de la même manière sur les extrémités extérieures des tronçons 19 et ménagent également à l'intérieur un double passage pour les deux rubans.

Chacun des tronçons latéraux 22 et 23 est constitué par un autre type de profilé, visible en coupe sur la fig. 7, et qui comporte également un passage rectangulaire central épousant la section du ruban, comme les doubles passages des profilés 19, avec de préférence une rainure de dégagement dans le fond et une aile de fixation 29. En outre, ce profilé est ouvert sur le côté extérieur, et les deux bords de l'ouverture sont prolongés chacun par un rebord horizontal 2 et 3.

Ces rebords 2 et 3 servent au guidage horizontal d'un chariot 30 constitué par une pièce ayant le profil représenté sur la fig. 4 pour permettre une certaine inclinaison du panneau 10, cette pièce profilée étant raccordée au panneau 1 par une patte coudée 31 ce qui assure le coulissement horizontal de cette partie 30 et du bord avant du panneau 10. Comme on le voit sur la fig. 7, l'extrémité de la pièce 30 s'arrête à courte distance du ruban plastique 15 (ou 16) dont elle n'est pas solidaire.

Du côté arrière, chacun des profilés 22 et 23 sert également de guidage à un chariot arrière 21, qui, à la différence du précédent, est rendu solidaire du ruban 15 grâce à deux ergots 4 solidaires du chariot 21 et pénétrant dans des perforations du ruban. Le chariot 21 peut comporter en outre une partie enveloppant le bord intérieur supérieur du rail 23. Par contre, ce chariot 21 n'est pas solidaire du toit mais entraîne celui-ci par l'intermédiaire d'une lumière 25 visible sur les fig. 4 et 5 et comportant une partie inclinée suivie d'une partie supérieure horizontale. Dans cette lumière vient s'insérer un ergot 27 solidaire du panneau de toit 1 auquel il est fixé par une patte coudée 28. De cette manière le recul du chariot 21 dans le sens représenté par la flèche sur les fig. 4 et 5 produit, comme illustré sur ces figures, le léger mouvement d'escamotage vertical du panneau 10 précédant le mouvement de recul de ce panneau 10 en dessous du niveau du pavillon 1. Lors de ce mouvement, l'ergot 27 bute contre une patte fixe 26 relevée verticalement au-dessus du rebord supérieur 2 et traverse ce rebord à travers une échancrure pratiquée dans ce rebord 2, juste devant la patte 26. Ce mouvement d'inclinaison du panneau 10 est précisément accepté sans coincement par les deux chariots avant 30.

Par la manoeuvre de la manivelle 12, dont l'axe vertical entraîne le pigon 13, on produit par conséquent l'ouverture du toit ouvrant, ouverture au cours de laquelle les deux rubans 15 et 16 sont tous les deux mis en compression et convenablement guidés chacun dans un des espaces intérieurs de la double glissière avant 19 et des angles 24, et dans le passage unique d'une des simples glissières 22 et 23 respectivement pour les rubans 15 et 16, jusqu'à entraîner le chariot correspondant.

Outre le guidage des deux rubans pour leur permettre de travailler en compression, l'ensemble des glissières selon l'invention permet également d'assurer le guidage simple des chariots avant 30 et le guidage des chariots arrière 21 qui assurent à leur tour le double mouvement vertical et horizontal du toit. Naturellement la fermeture du toit s'opère de

0033816

la même manière en tournant la manivelle dans le sens inverse ce qui produit, par traction des rubans, le mouvement de fermeture, puis la remise à niveau du toit 10 avec le pavillon 1.

Grâce à ces fonctions multiples, l'ensemble est relativement simple et peu encombrant, et d'autre part l'inoxydabilité des divers éléments, rubans plastiques, profilés en alliage léger extrudés, et boîtiers en matière moulée, permet de placer l'ensemble directement dans une gorge de la cassette 11 qui constitue en même temps la gouttière d'évacuation des eaux d'infiltration. Malgré cela l'ensemble du mécanisme, lubrifié une fois pour toute à la construction, demeure d'un fonctionnement doux et silencieux.

REVENDICATIONS

1. Dispositif de manoeuvre d'un toit ouvrant coulissant de véhicule automobile, du type comportant des moyens de transmission par compression traction et leur moyen de guidage, ainsi que des moyens de guidage du bord avant du panneau de toit et des moyens de guidage et d'escamotage vertical du bord arrière de ce panneau de toit, caractérisé par le fait que l'ensemble de ces moyens de guidage est assuré par une glissière unique formée d'un tronçon avant rectiligne (19) et deux tronçons latéraux rectilignes (22, 23) raccordés chacun au tronçon avant (19) par des raccordements d'angle (24), le tronçon avant (19) ainsi que les raccordements d'angle (24) étant constitués par une glissière double fermée constituant deux espaces à section rectangulaire verticale pour un ruban de manoeuvre (15, 16), et les tronçons latéraux (22, 23) étant constitués chacun par une glissière simple ouverte au moyen d'une ouverture latérale tournée vers l'extérieur et prolongée sur ses deux bords par des rebords horizontaux (23) servant au guidage d'un chariot avant (30) solidaire du panneau de toit (10), et d'un chariot arrière (21) comportant un mécanisme (25, 27) d'escamotage vertical du panneau de toit précédant le coulissement, enfin deux tronçons (15, 16) de ruban plastique flexible perforé coulissant chacun dans l'espace central d'un des tronçons latéraux (22, 23), et dans un des espaces de guidage du tronçon avant (19) et des pièces d'angle (24), pour venir engréner sur un engrenage (13) à axe vertical situé au milieu du tronçon avant et comportant des dents (14) appropriées pour engrener avec les rubans perforés, les deux espaces dudit tronçon se déformant localement pour épouser sur deux arcs opposés la périphérie dudit engrenage.

2. Dispositif selon la revendication 1, caractérisé par le fait que l'ensemble du mécanisme est fixé dans une gorge d'une cassette emboutie (11) formant gouttière et qui vient elle-même se fixer sous le pavillon (1) du véhicule.

3. Dispositif selon la revendication 2, caractérisé par le fait que la pièce centrale de guidage (18) contenant l'engrenage (13) et les pièces d'angle (24) sont des pièces moulées, s'emboîtant sur les deux moitiés du tronçon avant (19), lesquels sont constitués chacun à l'aide d'un profilé extrudé muni d'au moins une aile de fixation (20) et dans lequel lesdits passages sont constitués par deux rainures ouvertes vers le bas et venant s'appliquer contre une gorge correspondante de la cassette (11), et que les tronçons latéraux (22, 23) sont constitués chacun par un profilé extrudé unique comportant également une aile de fixation (29).

4. Dispositif selon l'une quelconque des revendications précédentes, caractérisé par le fait que ledit mécanisme assurant l'escamotage vertical et le relèvement du bord arrière du panneau de toit et constitué par un ergot (27) solidaire du panneau de toit (10) et coulissant dans une lumière (25) pratiquée dans le chariot arrière (21) correspondant et comportant une partie inclinée assurant le mouvement vertical, suivi d'une partie horizontale assurant le verrouillage, l'ensemble coopérant avec une butée fixe (26) s'étendant au-dessus du rebord supérieur (2) des tronçons latéraux et une échancrure correspondante pratiquée dans ce rebord (2) devant ladite butée (26).

## FIG.1

## FIG.2

003816

FIG.3

FIG.6

FIG.7

FIG.8

FIG.9

FIG.4

FIG.5

0033816

**Office européen**

**des brevets**

**RAPPORT DE RECHERCHE EUROPEENNE**

0033816

Numéro de la demande

EP 80 40 1712

## DOCUMENTS CONSIDERES COMME PERTINENTS

| Catégorie | Citation du document avec indication, en cas de besoin, des parties pertinentes | Revendication concernée |
|---|---|---|
| A | DE - A - 2 309 317 (WEBASTO) | 1 |
| A | DE - A - 2 508 106 (AISIN SEIKI) | 1 |
| A | US - A - 3 913 970 (JARDIN et al.) | 1,4 |

----

**CLASSEMENT DE LA DEMANDE (Int. Cl.³)**

B 60 J 7/18

**DOMAINES TECHNIQUES RECHERCHES (Int. Cl.³)**

B 60 J

**CATEGORIE DES DOCUMENTS CITES**

X: particulièrement pertinent

A: arrière-plan technologique

O: divulgation non-écrite

P: document intercalaire

T: théorie ou principe à la base de l'invention

E: demande faisant interférence

D: document cité dans la demande

L: document cité pour d'autres raisons

&: membre de la même famille, document correspondant

Le présent rapport de recherche a été établi pour toutes les revendications

| Lieu de la recherche | Date d'achèvement de la recherche | Examinateur |
|---|---|---|
| La Haye | 25-03-1981 | SCHMAL |

OEB Form 1503.1 06.78